# EUROPÄISCHE PATENTSCHRIFT

(11) **EP 0 782 507 B1**
(45) Veröffentlichungstag und Bekanntmachung des Hinweises auf die Patenterteilung: **11.11.1998**
(21) Anmeldenummer: 95924931.9
(22) Anmeldetag: 24.06.1995
(51) Int. Cl.: B60K 17/04, F16H 57/12, B60T 1/06

(54) **VERFAHREN UND EINRICHTUNG ZUR ZUMINDEST ANTEILIGEN ÜBERWINDUNG BZW. AUFHEBUNG DES GETRIEBESPIELES IN EINER ABGEBREMSTEN, IM STAND ARBEITENDEN BAU- UND ARBEITSMASCHINE**
METHOD AND DEVICE FOR OVERCOMING OR ELIMINATING AT LEAST PROPORTIONALLY THE GEAR PLAY IN A BRAKED CONSTRUCTION AND WORKING MACHINE OPERATING IN A FIXED STATE
PROCEDE ET DISPOSITIF DESTINES A RATTRAPER OU A ELIMINER LE JEU DE TRANSMISSION DANS UN ENGIN DE TRAVAUX PUBLICS FREINE, FONCTIONNANT EN STATION FIXE

(30) Priorität: 13.07.1994 DE 4424622; 04.11.1994 DE 4439360
(43) Veröffentlichungstag der Anmeldung: 09.07.1997
(73) Patentinhaber: O & K ORENSTEIN & KOPPEL AG, 13581 Berlin (DE)
(72) Erfinder: LANGENBECK, Bernhard O&K Orenstein & Koppel AG, 44149 Dortmund (DE); MEISE, Andreas, D-44797 Bochum (DE)
(86) Internationale Anmeldenummer: EP9502463
(87) Internationale Veröffentlichungsnummer: WO9602399

(56) Entgegenhaltungen:
- EP-A- 0 084 197
- EP-A- 0 189 892
- GB-A- 2 155 583

## Beschreibung

Die Erfindung betrifft ein Verfahren zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl.

Achsangetriebene Bau- und/oder Arbeitsmaschinen, wie z.B. Kranfahrzeuge oder dgl., sind vielfach mit Bremsen im Bereich der Radköpfe ihrer Achsen ausgestattet, so daß sämtliche Räder einzeln oder zusammen gebremst werden können. Weiterhin befindet sich vielfach in jedem Radkopf ein Getriebe, insbesondere Planetengetriebe, mit fester Übersetzung. Mit Blick des Leistungsflusses von dem Antriebsmotor in Richtung des jeweiligen Rades kann die zugehörige Bremse entweder hinter oder vor dem Getriebe angeordnet sein. Wird die Bremse hinter dem Getriebe angeordnet, so ist nachteilig festzustellen, daß die Bremse auf ein hohes Bremsmoment ausgelegt werden muß, da das Getriebe aufgrund seiner Übersetzung das Drehmoment erhöht. Wird die Bremse jedoch vor dem Planetengetriebe angeordnet, so ist vorteilhaft hervorzuheben, daß die Bremse klein dimensioniert werden kann. Nachteilig ist jedoch festzustellen, daß das Getriebespiel sich unmittelbar auf das gebremste Fahrzeug überträgt, insbesondere dann, wenn das Fahrzeug im Stand äußeren Lastwechseln ausgesetzt wird. Ein äußerer Lastwechsel tritt beispielsweise bei einem Mobilbagger ein, der im Stand arbeitet, d.h. Material löst, aufnimmt und wieder absetzt. Die infolge des verhältnismäßig hohen Getriebespieles auftretenden Kräfte wirken sich insbesondere nachteilig auf die Bedienperson der Bau- oder Arbeitsmaschine aus.

Aus der EP-A 189 892 ist ein Raduntersetzungsbetriebe für eine Antriebsachse bekannt. Das Raduntersetzungsgetriebe für die Antriebsachse hat eine Halbwelle mit einem zentralen Zahnrad eines Planetengetriebes, dessen Satellitenzahnräder mit Achsen an einem Steg befestigt sind. An der Halbwelle sind mit Keilschlitznaben die beweglichen Scheiben einer Scheibenbremse mit hydraulische Betätigung montiert. Die Achsen der Satellitenzahnräder sind beidseitig im Steg befestigt, der seinerseits beidseitig in einem Gehäuse gelagert ist. Im einen Ende des Gehäuses ist der Zahnkranz des Planetengetriebes starr befestigt, während sein anderes Ende an dem Träger der Antriebsachse befestigt ist. Im anderen Ende des Gehäuses ist eine Nabe mit inneren Keilschlitzen befestigt, welche die unbeweglichen Scheiben der Scheibenbremse trägt, während dessen bewegliche Scheiben mit einem Ring in Kontakt stehen, der mit an dem Achsenträger befestigten hydraulisch betätigten abgefederten Kolben in Berührung steht.

Ziel des Erfindungsgegenstandes ist es, ein Verfahren und eine Einrichtung zu konzipieren, mit welchen es möglich ist, bei Bau- und/oder Arbeitsmaschinen, die insbesondere im Stand äußeren Lastwechseln ausgesetzt werden, das Spiel innerhalb der im Bereich der jeweiligen Radköpfe einer Achse miteinander zusammenwirkenden Bauteile weitestgehend zu eliminieren bzw. so zu negieren, daß es sich nicht mehr nachteilig auf die Bedienperson bzw. die im Peripheriebereich des Getriebes vorhandenen Bauteile auswirken kann.

Dieses Ziel wird bei einem Verfahren zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., erreicht mit mehreren Achsen, die mit Radköpfen versehen sind, wobei in jedem Radkopf ein mit einer Bremse, insbesondere einer Lamellenbremse, zusammenwirkendes Getriebe, insbesondere ein Planetengetriebe vorgesehen ist, und wobei im Bereich der Getriebe mittel- oder unmittelbar mit Getriebeteilen in Wirkverbindung stehende Bauteile formschlüssig zusammengeführt werden.

Alternativ dazu wird ein Verfahren zur zumindest anteiligen Überwindung bzw. Aufhebung eines Getriebespieles in einer abgebremsten und im Stand arbeitenden Bau- oder Arbeitsmaschine, insbesondere einem Bagger, Mobilbaggerlader, Kranfahrzeug, Containerkran oder dgl. vorgeschlagen mit mehreren Achsen, die mit Radköpfen versehen sind, wobei in jedem Radkopf ein mit einer Bremse, insbesondere einer Lamellenbremse, zusammenwirkenden Getriebe, insbesondere ein Planetengetriebe, vorgesehen ist, und wobei im Bereich des Getriebes mittel- oder unmittelbar mit Getriebeteilen in Wirkverbindung stehende Bauteile reibschlüssig zusammengeführt werden.

Vorteilhafte Weiterbildungen der alternativen Verfahren sind den zugehörigen verfahrensgemäßen Unteransprüchen zu entnehmen.

Das angeführte Ziel wird ebenfalls erreicht mit einer Einrichtung zur zumindest anteiligen Überwindung bzw Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen, die mit Radköpfen versehen sind, wobei in jedem Radkopf ein mit einer Bremse, insbesondere einer Lamellenbremse, zusammenwirkendes und aus einer Sonnenritzelwelle, Planeten und einem Hohlrad bestehendes Planetengetriebe vorgesehen ist, und wobei durch formschlüssige Zusammenführung von mittel- oder unmittelbar mit dem Planetengetriebe zusammenwirkenden Bauteilen eine elastische Verformung des Hohlrades herbeiführbar ist.

Alternativ wird das Ziel ebenfalls erreicht durch eine Einrichtung zur zumindest anteiligen Überwindung bzw Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen, die mit Radköpfen versehen sind, wobei in jedem Radkopf ein mit einer Bremse, insbesondere einer Lamellenbremse, zusammenwirkendes und aus einer Sonnenritzelwelle, Planeten und einem Hohlrad bestehendes Planetengetriebe vorgesehen ist, und wobei außerhalb des Planetengetriebes Bauteile vorgesehen sind, die mittel- oder unmittelbar mit Planetengetriebeteilen in Wirkverbindung stehen, und die unter Bildung einer Zusatzbremse reibschlüssig zusammenführbar sind.

Vorteilhafte Weiterbildungen der erfindungsgemäßen Einrichtungen sind den zugehörigen gegenständlichen Unteransprüchen zu entnehmen.

Durch die erfindungsgemäßen Maßnahmen wird sichergestellt, daß sich das bisher nachteilig bei im Stand auszuführenden Arbeiten, bei denen Lastwechsel auftreten, auf der Bedienperson auswirkende Getriebespiel innerhalb der Radkopfgetriebe nicht mehr ungedämpft auf das Fahrzeug übertragen wird. Der Arbeitsablauf der Bau- und Arbeitsmaschine kann somit weitestgehend ungestört von Einflüssen aus dem bzw. den Getrieben durchgeführt werden, unabhängig davon, ob die Maßnahme zur Überwindung des Getriebespieles im Bereich des Getriebes selber oder aber unter Negierung des tatsächlich vorhandenen Getriebespieles an anderer Stelle des Radkopfes durchgeführt wird.

Der Erfindungsgegenstand ist anhand eines Ausführungsbeispieles in der Zeichnung dargestellt und wird wie folgt beschrieben. Es zeigen:
- Figur 1: - Darstellung eines sogenannten 2-Wege-Mobilbaggers
- Figuren 2 und 3: - unterschiedliche konstruktive Ausführungen zur Überwindung bzw. zumindest anteiligen Aufhebung des Spieles innerhalb eines mit einem Planetengetriebe und einer Lamellenbremse ausgerüsteten Radkopfes einer der Achsen des 2-Wege-Baggers gemäß Figur 1.

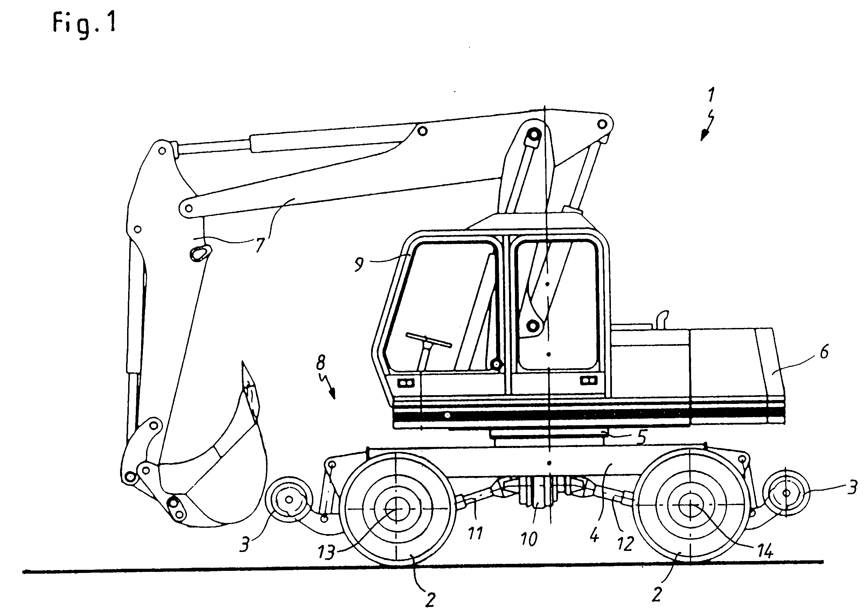

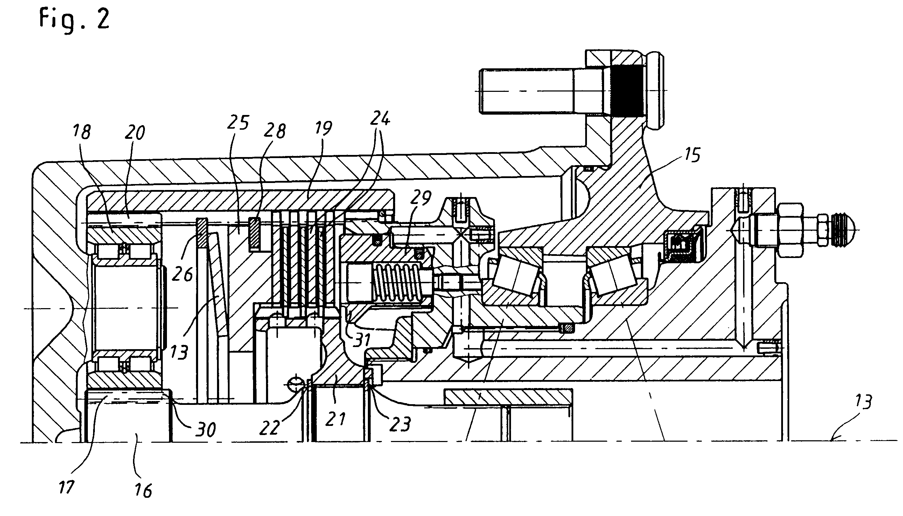

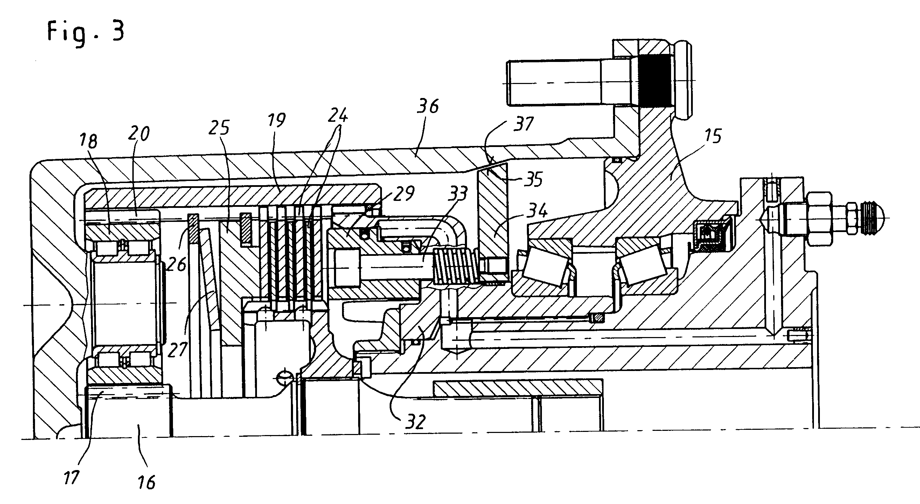

Figur 1 zeigt einen sogenannten 2-Wege-Mobilbagger 1, der einerseits über Räder 2 auf Straßen und im Gelände bewegbar ist, und der andererseits über Schienenführungsräder 3 z.B. im Schienennetz der Bundesbahn verfahrbar ist. Der Mobilbagger 1 besteht aus einem Unterwagen 4, der beispielsweise über eine Kugeldrehverbindung 5 mit einem Oberwagen 6 in Verbindung steht. Die Ausrüstung des Mobilbaggers 1 ist hierbei mit dem Bezugszeichen 7 versehen, wobei der Mobilbagger in diesem Ausführungsbeispiel in Neutralstellung dargestellt ist, d.h. die Ausrüstung 7 ist in Fahrtrichtung vorgesehen. Ferner angedeutet ist die Fahrerkabine 9. Im Stillstand des Mobilbaggers 1 wird die Ausrüstung 7 zum Zwecke des Materiallösens und -aufnehmens in eine Position geschwenkt, die etwa 90° zur Fahrtrichtung liegt. Im Bereich des Unterwagens 4 ist ein Verteilergetriebe 10 angedeutet, das über Gelenkwellen 11,12 mit den hier nicht weiter dargestellten Achsdifferentialen der jeweiligen Achsen 13,14 zusammenwirkt. Wie dies in den Figuren 2 und 3 näher ausgeführt wird, sind in den Radköpfen der Achsen 13 und 14 Getriebe und Bremsen angeordnet, wobei sich das Getriebespiel bei im Stand auftretenden Lastwechseln negativ auf die peripheren Getriebe- und Achsbauteile sowie der Bedienperson des Mobilbaggers 1 auswirken.

Figur 2 zeigt einen Teil des Radkopfes 15 der hier nicht weiter dargestellten Achse 13 für den Mobilbagger 1 gemäß Figur 1. Der Radkopf 15 beinhaltet eine Sonnenritzelwelle 16, die über eine Verzahnung 17 mit Planeten 18 kämmt, die wiederum mit einem dieselben umgebenden Hohlrad 19 über eine zugehörige Verzahnung 20 in Wirkverbindung stehen. Auf der Sonnenritzelwelle 16 ist desweiteren ein Lamellenträger 21 angeordnet, der axial zwischen zwei Stütz- und Sicherheitsringen 22,23 gehalten, fest mit der Sonnenritzelwelle 16 verbunden ist. Der Lamellenträger 21 wirkt mit mehreren, ein Lamellenpaket 24 bildenden Bremslamellen zusammen. Zwischen den Planeten 18 und dem Lamellenpaket 24 erstreckt sich eine das Lamellenpaket 24 fixierende Stützscheibe 25, die von einer sich an einem Sicherungsring 26 abstützenden vorgespannten Tellerfeder 27 in ihrer Position gehalten wird. Ein weiterer Sicherungsring 28 fixiert die Stützscheibe 25 gegen axiales Verrutschen in Richtung des Lamellenpaketes 24. Das Lamellenpaket 24 wird mittels eines Ringkolbens 29 in Richtung der Stützscheibe 25 und somit der auf den maximalen Bremsdruck des Ringkolbens 29 vorgespannten Tellerfeder 27 gepreßt, wodurch im normalen Fahrbetrieb eine Abbremsung der Arbeitsmaschine bis zum Stillstand herbeigeführt werden kann.

Zwischen dem Hohlrad 19 und den Planeten 18 existiert das kleinstmögliche Spiel. Ein geringes Spiel stellt sich unter Last, d.h. im normalen Fahrbetrieb durch eine elastische Verformung des Hohlrades 19 ein. Das sich im Fahr- und Bremszustand des Mobilbaggers 1 in der Getriebestufe 16-20 einstellende Spiel ist hierbei jedoch vernachlässigbar, d.h. es überträgt sich nicht nachteilig auf die Bedienperson. Wird der Mobilbagger 1 jedoch im Stand Lastwechseln durch Arbeitsabläufe, wie z.b. das Lösen und Aufnehmen von Material, unterzogen, so macht sich insbesondere das in der Getriebestufe 16-20 vorhandene Spiel dadurch bemerkbar, daß die Bedienperson unangenehmen Erschütterungen ausgesetzt wird. Gleiches gilt natürlich auch für die desweiteren angeführten Bau- und/oder Arbeitsmaschinen, deren Arbeitsaktivitäten in der Regel im Stand ausgeführt werden. Zur Überwindung dieses negativ sich auswirkenden Getriebespieles wird nun in diesem Beispiel der nicht tragende Bereich 30 der Sonnenritzelwelle 16 partiell am Umfang dicker ausgeführt als die Verzahnung 17. Im Stillstand des Mobilbaggers 1 wird nun ein über den maximalen Bremsdruck, der zum Anhalten des Mobilbaggers 1 ausreichend ist, erhöhter Arbeitsdruck über den Ringkolben 29 aufgebaut, der die Kraft der auf den maximalen Bremsdruck vorbespannten Tellerfeder 27 überwindet. In diesem Betriebszustand kommt ein am Ringkolben 29 vorgesehener Ansatz 31 am Lamellenträger 21 zur Anlage und bewegt diesen samt der damit fest verbundenen Sonnenritzelwelle 16 axial in Richtung der Planeten 18. Somit wird der verdickte Bereich 30 in den Bereich der Verzahnung 17 eingedrückt und das Getriebespiel somit zumindest anteilig dadurch überwunden, daß sich die so erzeugte Radialkraftkomponente in Richtung des Hohlrades 19 fortpflanzt und dieses geringfügig elastisch verformt. Der zum Verschieben des Lamellenträgers 21 und somit der Sonnenritzelwelle 16 notwendige Arbeitsdruck ist hierbei von der jeweiligen Achskonstruktion und dem Einsatzgebiet des Mobilbaggers 1 abhängig. Infolge des erhöhten Druckaufbaus wird neben dem Lamellenpaket 24, das mit dem Lamellenträger 21 zusammenwirkt, auch die Stützscheibe 25 in Richtung der Planeten 18 verschoben, wobei die Tellerfeder 27 ebenfalls eine flachere Gestalt annimmt. Die Rückstellung erfolgt im Anschluß an eine Reduzierung des erhöhten Arbeitsdruckes über die Tellerfeder 27, die Stützscheibe 25 und den Lamellenträger 21, der axial fixiert zwischen den Sicherungsringen 22,23 gehalten ist. Der Sicherheitsring 28 verhindert ein zu weites axiales Verschieben der Stützscheibe 25 in Richtung des Lamellenpaketes 24, wodurch gleichzeitig die Vorspannkraft der Tellerfeder 27 auf einem konstanten Wert gehalten wird.

Figur 3 zeigt eine alternative Lösungsform zur Aufhebung bzw. Negierung des sich in der Getriebestufe 16-20 im Radkopf 15 einstellenden Spieles, wobei der Aufbau der Lamellenbremse analog zur Figur 2 ist. Dargestellt ist das Lamellenpaket 24, die Stützscheibe 25, die Tellerfeder 27, der Sicherungsring 26, die Sonnenritzelwelle 16, das Hohlrad 19 sowie der Ringkolben 29. Die Verzahnung 18 der Sonnenritzelwelle 16 ist hierbei durchgängig im Bereich der Planeten 18, d.h. ohne Verdickung, ausgebildet. Wie bereits dargelegt, funktioniert die normale Betriebsbremse analog zu Figur 2. Die Bremskraft wirkt vom Hohlrad 19 über den Ringkolben 29, das Lamellenpaket 24, die Stützscheibe 25, die vorgespannte Tellerfeder 27, den Sicherungsring 26 auf den Hohlradträger 32. Die im Bereich des Ringkolbens 29 vorgesehene Schraube 33 wirkt in diesem Beispiel mit einem scheibenförmigen Bauelement 34 zusammen, welches radial außen mit einer angeschrägten Umfangsfläche 35 versehen ist. Im Planetenträger 36 ist ein korrespondierender angeschrägter Bereich 37 vorgesehen. Auch hier wird im Stillstand der Arbeitmaschine ein über den normalen Bremsdruck hinausgehender Arbeitsdruck aufgebaut, der die Vorspannkraft der Tellerfeder 27 überwindet, wobei die über die Schraube 33 mit dem Ringkolben 29 verbundene konische Umfangsfläche 35 des Bauelementes 34 unter Aufbau einer reibschlüssigen Verbindung in den ebenfalls angeschrägten Bereich 37 des Planetenträgers 36 gedrückt wird. Mittels des Kegelsitzes 37 wird der Planetenträger 36 unter Bildung einer Zusatzbremse außerhalb der Getriebestufe 16-20 gegen den Hohlradträger 32 gebremst und das in der Getriebestufe 16-20 vorhandene Spiel somit aufgehoben bzw. negiert, d.h. es wirkt sich nicht mehr negativ auf die Bedienperson aus.

## Patentansprüche

1. Verfahren zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen (13,14), die mit Radköpfen (15) versehen sind, wobei in jedem Radkopf (15) ein mit einer Bremse, insbesondere einer Lamellenbremsen (24), zusammenwirkendes Getriebe, insbesondere ein Planetengetriebe (16-20) vorgesehen ist, und wobei im Bereich des Getriebes, mittel- oder unmittelbar mit Getriebeteilen (18) in Wirkverbindung stehende Bauteile (17,30) formschlüssig zusammengeführt werden.

2. Verfahren zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen (13,14), die mit Radköpfen (15) versehen sind, wobei in jedem Radkopf (15) ein mit einer Bremse, insbesondere einer Lamellenbremse (24), zusammenwirkendes Getriebe, insbesondere ein Planetengetriebe, vorgesehen ist, und wobei im Bereich des Getriebes mittel- oder unmittelbar mit Getriebeteilen (18) in Wirkverbindung stehende Bauteile (34,36) reibschlüssig zusammengeführt werden.

3. Verfahren nach Anspruch 1, dadurch gekennzeichnet, daß das in dem Planetengetriebe (16-20) vorhandene Getriebespiel durch mindestens eine eine elastische Verformung des Hohlrades (19) bewirkende Kraftkomponente zumindest anteilig überwunden wird.

4. Verfahren nach Anspruch 3, dadurch gekennzeichnet daß das in dem Planetengetriebe (16-20) vorhandene Radialspiel durch axiale Zusammenführung von unmittelbar mit dem Planetengetriebe (16-20) zusammenwirkenden Bauteilen (16,18,30) ausgeglichen wird.

5. Verfahren nach Anspruch 2, dadurch gekennzeichnet, daß das Getriebespiel außerhalb des Planetengetriebes (16-20) durch eine Zusatzbremse bildende Bauteile (34,36) aufgehoben bzw überwunden wird.

6. Verfahren nach einem oder mehreren der Ansprüche 1 bis 5, dadurch gekennzeichnet, daß im Stillstand der Bau- und Arbeitsmaschine ein über den zum Anhalten benötigter Bremsdruck hinausgehender Arbeitsdruck zum Zusammenführen der Bauteile (16-18,30;34,36) aufgebaut wird.

7. Einrichtung zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen (13,14), die mit Radköpfen (15) versehen sind, wobei in jedem Radkopf (15) ein mit einer Bremse, insbesondere einer Lamellenbremse (24), zusammenwirkendes und aus einer Sonnenritzelwelle (16), Planeten (18) und einem Hohlrad (19) bestehendes Planetengetriebe vorgesehen ist, und wobei durch formschlüssige Zusammenführung von mittel- oder unmittelbar mit dem Planetengetriebe zusammenwirkenden Bauteilen (16,17,30) eine elastische Verformung des Hohlrades (19) herbeiführbar ist.

8. Einrichtung zur zumindest anteiligen Überwindung bzw. Aufhebung eines Getriebespieles in einer abgebremsten und im Stand arbeitenden Bau- und Arbeitsmaschine, insbesondere einem Bagger, Mobilbaggerlader, Kranfahrzeug, Containerkran oder dgl., mit mehreren Achsen (13,14), die mit Radköpfen (15) versehen sind, wobei in jedem Radkopf (15) ein mit einer Bremse, insbesondere einer Lamellenbremse (24), zusammenwirkendes und aus einer Sonnenritzelwelle (16), Planeten (18) und einem Hohlrad (19) bestehendes Planetengetriebe vorgesehen ist, und wobei außerhalb des Planetengetriebes Bauteile (34,36) vorgesehen sind, die mittel- oder unmittelbar mit Planetengetriebeteilen in Wirkverbindung stehen, und die unter Bildung einer Zusatzbremse reibschlüssig zusammenführbar sind.

9. Einrichtung nach Anspruch 7, dadurch gekennzeichnet, daß die Sonnenritzelwelle (16) axial außerhalb ihres tragenden Bereiches am Umfang mit mindestens einer Verdickung (30) im Bereich ihrer Verzahnung (17) versehen ist, die im Stillstand der Bau- und Arbeitsmaschine unter Axialkrafteinwirkung in die korrespondierende Planetenverzahnung einführbar ist.

10. Einrichtung nach Anspruch 9, dadurch gekennzeichnet, daß zum Abbremsen der Bau- und Arbeitsmaschine ein Ringkolben (29) das Lamellenpaket (24) mit einem vorgebbaren Bremsdruck zusammenpreßt, wobei sich das Lamellenpaket (24) über eine Stützscheibe (25), eine vorgespannte Feder (27) und einen Sicherungsring (26) am Hohlrad (19) abstützt, und daß im Stillstand der Bau- und Arbeitsmaschine durch weiteren Druckaufbau mittels des Ringkolbens (29) die Vorspannkraft der Feder (27) überwunden und die Sonnenritzelwelle (16) axial in Richtung der Planeten (18) verschoben wird.

## Claims

1. Method of at least partially overcoming or eliminating gear play in a construction and work machine which is braked and working while stationary, especially in an excavator, mobile excavator-loader, mobile crane, container crane or the like, having a plurality of axles (13, 14) provided with wheel heads (15), wherein in each wheel head (15) there is provided a gear, especially a planetary gear (16 - 20), cooperating with a brake, especially a multiple disc brake (24), and wherein components (17, 30) in direct or indirect operative connection with gear parts (18) are brought together in positive engagement in the region of the gear.

2. Method of at least partially overcoming or eliminating gear play in a construction and work machine which is braked and working while stationary, especially in an excavator, mobile excavator-loader, mobile crane, container crane or the like, having a plurality of axes (13, 14) provided with wheel heads (15), wherein in each wheel head (15) there is provided a gear, especially a planetary gear, cooperating with a brake, especially a multiple disc brake (24), and wherein components (34, 36) in direct or indirect operative connection with gear parts (18) are brought together in frictional engagement in the region of the gear.

3. Method according to claim 1, characterised in that the gear play present in the planetary gear (16 - 20) is at least partially overcome as a result of at least one force component that effects resilient deformation of the annulus (19).

4. Method according to claim 3, characterised in that the radial play present in the planetary gear (16 - 20) is neutralised by axially bringing together components (16, 18, 30) that cooperate directly with the planetary gear (16 - 20).

5. Method according to claim 2, characterised in that the gear play is eliminated or overcome outside the planetary gear (16 - 20) by means of components (34, 36) that form an auxiliary brake.

6. Method according to one or more of claims 1 to 5, characterised in that, when the construction and work machine is stationary, a working pressure exceeding the braking pressure required for stopping is built up for bringing together the components (16 - 18; 30; 34; 36).

7. Device for at least partially overcoming or eliminating gear play in a construction and work machine which is braked and working while stationary, especially in an excavator, mobile excavator-loader, mobile crane, container crane or the like, having a plurality of axles (13, 14) provided with wheel heads (15), wherein in each wheel head (15) there is provided a planetary gear consisting of a sun pinion shaft (16), planets (18) and an annulus (19) and cooperating with a brake, especially a multiple disc brake (24), and wherein, by bringing together in positive engagement components (16, 17, 30) cooperating directly or indirectly with the planetary gear, it is possible to effect resilient deformation of the annulus (19).

8. Device for at least partially overcoming or eliminating gear play in a construction and work machine which is braked and working while stationary, especially in an excavator, mobile excavator-loader, mobile crane, container crane or the like, having a plurality of axles (13, 14) provided with wheel heads (15), wherein in each wheel head (15) there is provided a planetary gear consisting of a sun pinion shaft (16), planets (18) and an annulus (19) and cooperating with a brake, especially a multiple disc brake (24), and wherein there are provided outside the planetary gear components (34, 36) which are in direct or indirect operative connection with planetary gear parts and which can be brought together in frictional engagement to form an auxiliary brake.

9. Device according to claim 7, characterised in that the sun pinion shaft (16) is provided on its periphery, axially outside its contacting region, with at least one thickened portion (30) in the region of its tooth arrangement (17), which thickened portion (30) is arranged to be inserted into the corresponding planet tooth arrangement under the action of axial force when the construction and work machine is stationary.

10. Device according to claim 9, characterised in that, to brake the construction and work machine, an annular piston (29) presses together the disc assembly (24) with a prespecifiable braking pressure, the disc assembly (24) being supported against the annulus (19) *via* a supporting ring (25), a preloaded spring (27) and a securing ring (26), and when the construction and work machine is stationary, as a result of further pressure built up by means of the annular piston (29) the preloading force of the spring (27) is overcome and the sun pinion shaft (16) is displaced axially towards the planets (18).

## Revendications

1. Procédé pour supprimer ou rattraper, au moins proportionnellement, un jeu de transmission dans un engin de chantier/engin de travail freiné et travaillant à poste fixe, notamment un excavateur, une pelle chargeuse mobile, un véhicule-grue, une grue de manutention de conteneurs ou analogue, comportant plusieurs essieux (13, 14), qui sont pourvus de têtes de roues (15), selon lequel dans chaque tête de roue (15) est prévu un mécanisme, notamment un engrenage planétaire (16-20), coopérant avec un frein, notamment un frein à disques (24), et selon lequel des composants (17, 30) coopérant, dans la zone de la transmission, directement ou indirectement avec des parties (18) de la transmission sont réunis selon une liaison par formes complémentaires.

2. Procédé pour supprimer ou rattraper, au moins proportionnellement, un jeu de transmission dans un engin de chantier/engin de travail freiné et travaillant à poste fixe, notamment un excavateur, une pelle chargeuse mobile, un véhicule-grue, une grue de manutention de conteneurs ou analogue, comportant plusieurs essieux (13, 14), qui sont pourvus de têtes de roues (15), selon lequel dans chaque tête de roue (15) est prévu un mécanisme, notamment un engrenage planétaire, coopérant avec un frein, notamment frein à disques (24), et selon lequel des composants (34, 36),coopérant, dans la zone de la transmission, directement ou indirectement avec des parties (18) de la transmission sont réunis selon une liaison de frottement.

3. Procédé selon la revendication 1, caractérisé en ce que le jeu de transmission présent dans l'engrenage planétaire (16-20) est rattrapé au moins proportionnellement à l'aide d'au moins une composante de force produisant une déformation élastique de la roue à denture intérieure (19).

4. Procédé selon la revendication 3, caractérisé en ce que le jeu radial présent dans l'engrenage planétaire (16-20) est compensé par la réunion axiale de composants (16, 18, 30) coopérant directement avec l'engrenage planétaire (16-20).

5. Procédé selon la revendication 2, caractérisé en ce que le jeu de transmission est éliminé ou rattrapé à l'extérieur de l'engrenage planétaire (16-20) par des composants (34, 36) constituant un frein supplémentaire.

6. Procédé selon une ou plusieurs des revendications 1 à 5, caractérisé en ce que lorsque l'engin de chantier/engin de travail est à l'arrêt, une pression de travail supérieure à la pression de travail nécessaire pour l'arrêt, est établie pour une réunion des composants (16-18, 30 ; 34, 36).

7. Dispositif pour supprimer ou rattraper, au moins partiellement, un jeu de transmission dans un engin de chantier/engin de travail freiné et travaillant à poste fixe, notamment un excavateur, une pelle chargeuse mobile, un véhicule-grue, une grue de manutention de conteneurs ou analogue, comportant plusieurs essieux (13, 14), qui sont pourvus de têtes de roues (15), selon lequel dans chaque tête de roue (15) est prévu un engrenage planétaire coopérant avec un frein notamment un frein à disques (24) et constitué par un arbre (16) de la roue planétaire, des pignons satellites (18) et une roue à denture intérieure (19), et dans lequel une déformation élastique de la roue à denture intérieure (19) peut être réalisée au moyen de la réunion, selon une liaison par formes complémentaires, de composants (16, 17, 30) coopérant directement ou indirectement avec l'engrenage planétaire.

8. Dispositif pour supprimer ou rattraper, au moins partiellement, un jeu de transmission dans un engin de chantier/engin de travail freiné et travaillant à poste fixe, notamment un excavateur, une pelle chargeuse mobile, un véhicule-grue, une grue de manutention de conteneurs ou analogue, comportant plusieurs essieux (13, 14), qui sont pourvus de têtes de roues (15), selon lequel dans chaque tête de roue (15) est prévu un engrenage planétaire (16-20), coopérant avec un frein notamment un frein à disques (24) et constitué par un arbre (16) de la roue planétaire, des pignons satellites (18) et une roue à denture intérieure (19), et dans lequel à l'extérieur de l'engrenage planétaire sont prévus des composants (34, 36), qui coopèrent directement ou indirectement avec des parties de l'engrenage planétaire et qui peuvent être réunies selon une liaison par frottement en formant un frein supplémentaire.

9. Dispositif selon la revendication 7, caractérisé en ce que l'arbre (16) de la roue planétaire comporte axialement, à l'extérieur de sa partie de support, sur la périphérie, au moins un épaississement (30) situé dans la zone de sa denture (17) et qui, lorsque l'engin de chantier/engin de travail est arrêté, peut être inséré moyennant l'application d'une force axiale dans la denture de pignon satellite correspondante.

10. Dispositif selon la revendication 9, caractérisé en ce que pour le freinage de l'engin de chantier/engin de travail, un piston annulaire (29) comprime le paquet de disques (24) avec une pression de freinage pouvant être prédéterminée, le paquet de disques (24) prenant appui par l'intermédiaire d'un disque d'appui (25), d'un ressort précontraint (27) et d'une bague de sécurité (26) contre la roue à denture intérieure (19) et que, lorsque l'engin de chantier/engin de travail est arrêté, la force de précontrainte du ressort (29) est vaincue par un accroissement de la pression au moyen du piston annulaire (29), et l'arbre (16) de la roue planétaire est déplacé axialement en direction des pignons satellites (18).
